Europäisches Patentamt

European Patent Office

Office européen des brevets

(19)

(11) Veröffentlichungsnummer: **0 555 814 A1**

## (12) EUROPÄISCHE PATENTANMELDUNG

(21) Anmeldenummer: **93102000.2**

(22) Anmeldetag: **09.02.93**

(51) Int. Cl.5: **F24F 13/24**

(30) Priorität: **14.12.92 DE 9216991 U**
**13.02.92 DE 4204189**

(43) Veröffentlichungstag der Anmeldung:
**18.08.93 Patentblatt 93/33**

(84) Benannte Vertragsstaaten:
**AT BE CH DE DK ES FR GB GR IE IT LI LU MC NL PT SE**

(71) Anmelder: **SCHAKO METALLWARENFABRIK FERDINAND SCHAD KG**
**Zweigniederlassung Kolbingen**
**D-78600 Kolbingen(DE)**

(72) Erfinder: **Teige, Karin, Dipl.-Ing.**
**Traubenstrasse 46**
**W-7000 Stuttgart 1(DE)**

(74) Vertreter: **Weiss, Peter, Dr. rer.nat.**
**Dr. Peter Weiss & Partner Postfach 12 50**
**Zeppelinstrasse 4**
**D-78234 Engen (DE)**

(54) **Umlenkschalldämpfer.**

(57) Bei einem Umlenkschalldämpfer zum Einsetzen in ein Luftführungssystem besteht dieser aus zumindest einem geraden Kanalabschnitt (1, 3) und einem Bogenteil (2). Dabei ist der Kanalabschnitt (1, 3) und/oder der Bogenteil (2) mit einem Absorber (8, 9) zumindest teilweise ausgekleidet.

Fig. 1

EP 0 555 814 A1

Die Erfindung betrifft einen Umlenkschalldämpfer zum Einsetzen in ein Luftführungssystem bestehend aus zumindest einem geraden Kanalabschnitt und einem Bogenteil.

In Luftführungssystemen werden Schalldämpfer zur Lärmminderung eingesetzt, um störende Lärmeinwirkungen in schützenswerten Räumen oder in der Nachbarschaft zu verhindern. Beispielsweise findet ein Umlenkschalldämpfer Anwendung in einem Luftführungssystem zur Dämpfung von Ventilatorgeräuschen. In der Regel werden heute Werkhallen über ein Luftführungssystem mit Frischluft versorgt. Die Frischluftzufuhr erfolgt über ein Kanalsystem, in dem zumindest ein Ventilator über Filter und Kühl- bzw. Heizaggregate Luft von außen ansaugt, diese über entsprechende Umlenkungen dem Raum zuführt und meist über eine 90° Umlenkung in den Raum ausbläst. Entsprechend vorgegebenen Normen dürfen jedoch am Arbeitsplatz nur bestimmte Schalldruckpegel vorhanden sein, wobei diese hauptsächlich durch die Betriebsgeräusche bestimmt werden. Daher darf ein entsprechendes Ventilatorgeräusch keinen Beitrag zu dem in dem Raum bereits herrschenden Schalldruckpegel leisten und muß daher erheblich unter dem Betriebslärm liegen. Dies macht es notwendig, daß in dem Luftführungssystem und insbesondere in der Umlenkung vor dem Ausblasen der Zuluft in einen Raum entsprechende Schalldämpfungen durchgeführt werden.

Die mit einem Schalldämpfer erzielbare Dämpfung in Luftführungssystemen hängt unter anderem von der Spaltbreite zwischen den in den Kanälen angeordneten Absorbern ab. In geraden Kanälen liegt der Wirkungsbereich von Schalldämpfern bei Wellenlängen, die größer sind als der Spalt zwischen den Absorbern. Für eine hohe Dämpfung des Schalldämpfers sind daher relativ enge Spaltbreiten notwendig, deren Ausführung jedoch ein großes Absorber-Volumen benötigt. Durch die engen Spaltbreiten wird der Kanalquerschnitt stark verengt, mit der Folge von hohen Druckverlusten und hohen Strömungsgeschwindigkeiten im Spalt. Dies ist äußerst unerwünscht.

Demgegenüber weisen Umlenkungen eine Dämpfung auch bei Wellenlängen auf, die kleiner sind als der Spalt zwischen den Absorbern. Deshalb würde sich hier die Anordnung von Absorbern anbieten, allerdings ist deren technische Ausgestaltung sehr aufwendig, da die Absorber den Umlenkungen angepaßt sein müssen.

Der vorliegenden Erfindung liegt die Aufgabe zugrunde, einen Umlenkschalldämpfer in Bogenform so zu optimieren, daß er in einem möglichst breiten Frequenzbereich mit einer relativ geringen Auskleidung eine möglichst hohe Einfügungsdämpfung aufweist.

Zur Lösung dieser Aufgabe führt, daß der Kanalabschnitt und/oder der Bogenteil mit einem Absorber zumindest teilweise ausgekleidet ist.

In Luftführungssystemen müssen in der Regel aus Gründen der Kanalführung bereits Umlenkungen vorgesehen werden. Dies gilt besonders für die Zuführung kurz vor beispielsweise einem Deckenauslaß, da die Zuführung entlang der Decke geführt und dann rechtwinklig abgebogen werden muß. Deshalb bietet sich die Anordnung von entsprechenden Absorbern in derartigen Umlenkungen an, um hohe Dämpfungen auch bei großen Spaltbreiten und damit bei niedrigeren Druckverlusten und Strömungsgeschwindigkeiten zu erzielen.

Bevorzugt sollen die Absorber innerhalb des Umlenkschalldämpfers zweidimensional angeordnet sein, d.h., sich gegenüberliegend etwa parallel verlaufen. Bei einem Luftführungssystem, welches meist einen rechtwinkligen Querschnitt hat, sind dementsprechend eine innere Wand und eine äußere Wand im Inneren des Kanalabschnitts und/oder des Bogenteils mit den Absorberflächen belegt. Damit wird auf jeden Fall gewährleistet, daß der Schall in der Umlenkung auf den Absorber an der äußeren Wand auftrifft.

Die vorliegende Erfindung bezieht sich vor allem auf einen 90°-Umlenkschalldämpfer, wobei der Bogenteil um einen Radius von etwa 90° verläuft. Allerdings sollen vom Erfindungsgedanken auch Abweichungen um die 90° in einem bestimmten Rahmen erfaßt sein.

In der Regel dürften sich beidseits an den Bogenteilen Kanalabschnitte anschließen, so daß das Bogenteil zwischen diesen beiden Kanalabschnitten angeordnet ist, wobei dann einer von ihnen oder beide, wie später beschrieben, mit den Absorbern belegt sein können.

In einem Ausführungsbeispiel der Erfindung ist die gesamte Umlenkung mit Absorbern der gleichen Art ausgekleidet. Hierbei kann es sich beispielsweise um poröse Absorber handeln. Bevorzugt wird als poröser Absorber Mineralwolle benutzt, wobei jedoch auch andere poröse Absorbermedien im Rahmen der Erfindung liegen.

Hierbei ist erkennbar, daß im tieferen Frequenzbereich bis etwa 150 Hz kaum eine Einfügungsdämpfung stattfindet, daß dann aber die Einfügungsdämpfung sehr stark im Bereich bis 500 Hz ansteigt und bei 500 Hz mit etwa 48 dB ihr Maximum erreicht. Danach fällt die Einfügungsdämpfung wieder etwas ab, bleibt jedoch auch bis in einen Bereich von 8 kHz über 20 dB.

Eine breitbandige Dämpfung tiefer Frequenzen kann durch poröse Absorber nicht erreicht werden, da poröse Absorber infolge des begrenzten Raumes nicht ausreichend dick eingebaut werden können. Erfindungsgemäß werden deshalb poröse Absorber im vorliegenden Fall mit anderen Absorber gekoppelt.

Hier bieten sich vor allem Membran-Absorber an, auf die jedoch der Erfindungsgedanke nicht ausschließlich begrenzt sein soll. Allerdings ist bekannt, daß Membran-Absorber vor allem zur Dämpfung tiefer Frequenzen wirkungsvoll eingesetzt werden können. Als andere Absorber kommen jedoch auch Helmholtzresonatoren, Plattenresonatoren od. dgl. in Frage.

Da eine Biegung von Membran-Absorbern einen erheblichen Aufwand und auch Verlust des Wirkungsgrades mit sich bringen würde, ist erfindungsgemäß vorgesehen, daß der Bogenteil von einem porösen Absorber ausgekleidet ist, während sich die Membran-Absorber in den geraden Kanalabschnitten befinden. Je nach Anforderung ist es möglich, nur in einem Kanalabschnitt, bevorzugt in dem Einström-Kanalabschnitt einen Membran-Absorber oder in dem Ausströmkanalabschnitt oder in beiden Kanalabschnitten Membran-Absorber vorzusehen. Durch diese Ausgestaltung ist eine breitbandige Einfügungsdämpfung von über 20 dB in einem Frequenzbereich bereits ab etwa 125 Hz möglich.

Eine weitere Ausgestaltung der Erfindung betrifft die Dicke der Abdeckmembran der Membran-Absorber. Hier hat sich erwiesen, daß eine Dicke von 0,2 mm die größten Vorteil mit sich bringt. Bei dieser Dicke besitzt ein entsprechend belegter Umlenkschalldämpfer in einem Frequenzbereich von 200 Hz bis 10 kHz eine Einfügungsdämpfung von ca. 20 dB.

Noch eine weitere Verbesserung der Erfindung wird durch die Anordnung eines Leitbleches in den Umlenkschalldämpfer und hier insbesondere in dem Bogenteil erzielt. Ein derartiges Leitblech verbessert die Wirkung eines Umlenkschalldämpfers bei tiefen Frequenzen. Ist das Leitblech noch zusätzlich mit einem Absorber, beispielsweise einem Schaumstoff belegt, so erhöhen diese belegten Leitbleche drastisch die Einfügungsdämpfungen bei hohen Frequenzen.

Da Ventilatoren Geräuschspektren mit relativ hohen Anteilen im tieffrequenten Bereich erzeugen, zeigt die vorliegende Erfindung einen Umlenkschalldämpfer, der sich insbesondere vorteilhaft bei der Dämpfung von Ventilatorengeräuschen erweist. Zur Dämpfung schmalbandiger Spektren mit tieffrequenten Anteilen bei 125 Hz bzw. 160 Hz können entsprechende 90°-PA/MA-Umlenkschalldämpfer zum Einsatz kommen, deren Membran-Absorber eine dickere Abdeckmembrane besitzen. Die Absorberanordnung vor dem Bogenteil ergibt bei gleicher Absorberfläche im übrigen maximal 5 dB höhere Einfügungsdämpfungen als diejenige Anordnung hinter dem Bogenteil. In Anwendungsfällen, bei denen aufgrund des Geräuschspektrums nur geringe Dämpfungswerte und aus Aspekten der Wirtschaftlichkeit nur kleine Absorberflächen erforderlich sind, hat sich die Auskleidung des Kanalabschnitts vor dem Bogenteil als vorteilhaft erwiesen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Figur 1 eine perspektivische Ansicht eines Teiles eines 90°-Umlenkschalldämpfers;

Figur 2 eine schematische Draufsicht auf ein Ausführungsbeispiel eines 90°-Umlenkschalldämpfers;

Figur 3 bis Figur 5 schematische Draufsichten auf weitere Ausführungsbeispiele von 90°-Umlenkschalldämpfer;

Figur 6 ein Diagramm einer Einführungsdämpfung eines Ausführungsbeispiels eines Umlenkschalldämpfers belegt mit einem porösen Absorber;

Figur 7 ein Diagramm einer Einführungsdämpfung eines Ausführungsbeispiels eines mit anderen Absorbern belegten Umlenkschalldämpfers;

Figur 8 ein Diagramm von verschiedenen Einführungsdämpfungen in einem Umlenkschalldämpfer;

Figur 9 ein Diagramm von Einführungsdämpfungen eines Umlenkschalldämpfers gemäß Figur 6 und eines Umlenkschalldämpfers gemäß Figur 8;

Figur 10 ein Diagramm von Einführungsdämpfungen bei unterschiedlich in einen Umlenkschalldämpfer angeordneten Absorbern;

Figur 11 ein Diagramm von Einführungsdämpfungen bei einem Umlenkschalldämpfer mit Leitblech.

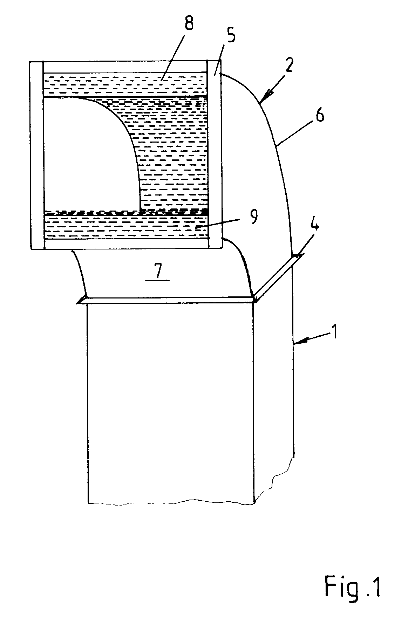

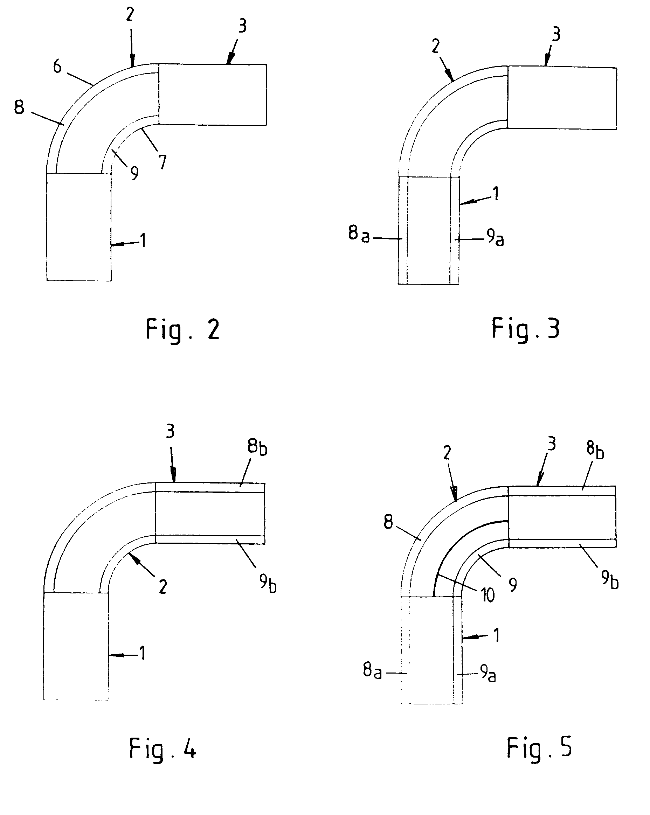

Ein erfindungsgemäßer 90°-Umlenkschalldämpfer weist drei Abschnitte auf, von denen in Figur 1 der Übersichtlichkeit halber nur zwei dargestellt sind. An einem Kanalabschnitt 1 schließt ein Bogenteil 2 an, auf das ein weiterer in den Figuren 2 bis 5 nur schematisch dargestellter Kanalabschnitt 3 anschließt. Wird dieser 90°-Umlenkschalldämpfer in einem Luftführungssystem als Teil eines Lüftungskanals benutzt, so soll der Kanalabschnitt 1 die Einströmseite und der Kanalabschnitt 3 die Ausströmseite andeuten.

Die Kanalabschnitte 1 und 3 sind im übrigen über entsprechende Flansche 4 bzw. 5 mit dem Bogenteil 2 verbunden.

In einer beispielhaften Ausführungsform bestehen sowohl die Kanalabschnitte 1 und 3 wie auch das Bogenteil 2 aus 1mm dickem, glatten Stahlblech und sind querschnittlich rechteckig ausgebildet. Das Bogenteil 2 hat die Form eines Viertelkreises.

Erfindungsgemäß werden eine äußere Wand 6 und eine innere Wand 7 der Kanalabschnitte 1 und 3 bzw. des Bogenteils 2 mit einem Absorber 8 bzw. 9 belegt, so daß diese Belegung als zweidimensional bezeichnet werden kann. Durch diese Art der Belegung kann eine Querschnittsverengung des 90°-Umlenkschalldämpfers so gering wie möglich gehalten werden.

Erfindungsgemäß werden für diese Auskleidung zwei Absorbertypen verwendet:

a) Poröser Absorber

Hierbei wird eine Mineralwolle mit Glasvlies auf beiden Seiten verwendet. Aus Befestigungsgründen wird diese Mineralwolle mit einem akustisch transparenten Lochblech abgedeckt.

b) Membran-Absorbung

Membran-Absorber werden üblicherweise aus Aluminiumblechen in einer wabenförmigen, kubischen Form gefertigt, so daß einzelne Kammern entstehen. Die Kammern sind dann wieder von Aluminiummembranen abgedeckt, die z.B. mit doppelseitigem Klebeband an allen Kanten der Oberseite der einzelnen Kammern befestigt werden. Diese Aluminiummembranen sind mit einem Loch oder einem Schlitz je Kammer versehen, so daß hier eine Kopplung von einem Helmholtz- und Plattenresonator entsteht. Über die Loch- bzw. Schlitzmembran wird wiederum eine Abdeckmembran (ebenfalls aus Aluminium) aufgebracht. Sie schützt den Absorber vor Verschmutzung und bewirkt eine Verschiebung der Resonanzen zu tieferen Frequenzen. Die Abdeckmembran ist nur an den äußeren Rändern des Absorbers befestigt.

Gemäß Figur 2 sind Absorber 8 und 9 nur im Bogenteil 2 angeordnet. Gemäß Figur 3 befinden sich zusätzlich noch Absorber 8a und 9a in dem einströmseitigen Kanalabschnitt 1. In Figur 4 ist ein Ausführungsbeispiel gezeigt, in welchem sich Absorber 8b und 9b im ausströmseitigen Kanalabschnitt 3 befinden, dagegen nicht im einströmseitigen Kanalabschnitt 1. In Figur 5 befinden sich sowohl in den Kanalabschnitten 1 und 3 als auch im Bogenteil 2 entsprechende Absorber 8 und 9. Ferner ist im Bogenabschnitt noch ein Leitblech 10 vorgesehen. Dieses Leitblech besteht beispielsweise aus 1mm dickem Aluminium und ist der Form des Bogenteils 2 angepaßt. Das Leitblech kann schallhart sein oder aber mit beispielsweise porösem Schaumstoff belegt werden.

Für die Belegung der einzelnen Kanalabschnitte und Bogenteilen mit Absorbern sind verschiedene Variationen denkbar, die im übrigen nachfolgend optimiert sind. Das gleiche gilt auch für die Wahl der Dicke der Aluminiumabdeckmembran des Membran-Absorbers.

Zu vergleichen ist ferner die gesamte Auskleidung eines 90°-Umlenkschalldämpfers mit einem porösen Absorber ausschließlich aus Mineralwolle und die Kombination von porösen Absorbern mit Membran-Absorbern, wobei der Bogenteil 2 von porösen Absorbern belegt ist, während sich die Membran-Absorber in den geraden Kanalabschnitt 1 und 3 befinden.

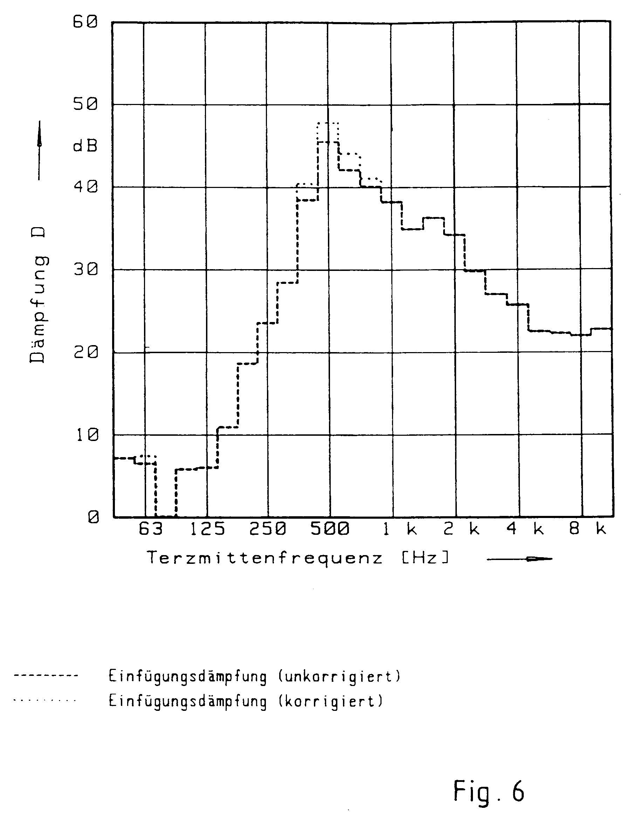

In Figur 6 ist die Einfügungsdämpfung eines Umlenkschalldämpfers, belegt mit porösen Absorbern über der Terzmittenfrequenz aufgetragen. Der Kurvenverlauf zeigt bei tiefen und mittleren Frequenzen den typischen Verlauf der Dämpfung durch poröse Absorber, wobei die Einfügungsdämpfung in diesem Frequenzbereich einen starken Anstieg aufweist. Im Frequenzbereich von 315 Hz bis 2 kHz lassen sich hohe Dämpfungen (> 30 dB) erkennen. Das Dämpfungsmaximum liegt bei etwa 500 Hz mit etwa 48 dB.

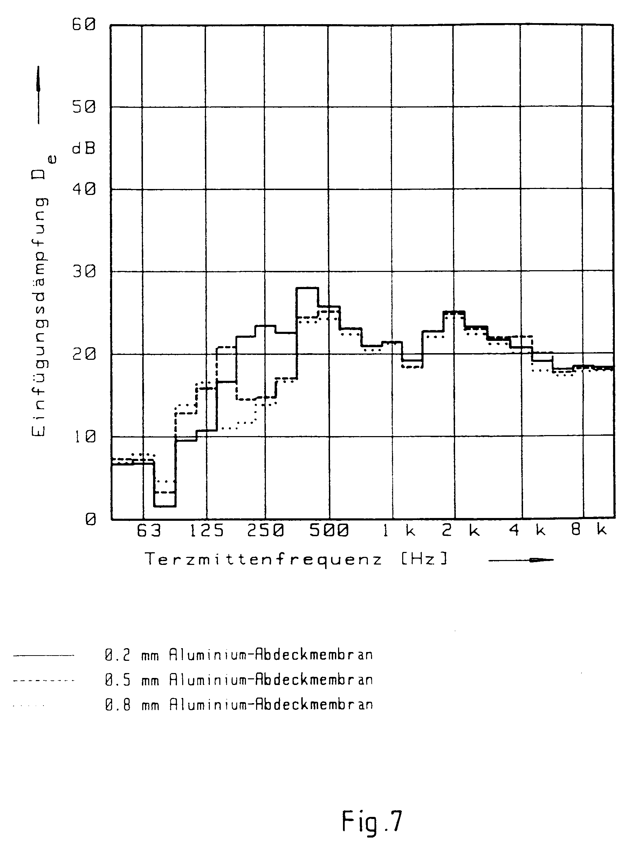

In Figur 7 ist die Einfügungsdämpfung eines Umlenkschalldämpfers dargestellt, der teils mit porösen Absorbern und teils mit Membranabsorbern belegt ist. Hierbei variiert jedoch die Dicke der Aluminium-Abdeckmembran. Erkennbar ist, daß mit zunehmender Dicke der Abdeckmembran das Dämpfungsmaximum des Membran-Absorbers zu tieferen Frequenzen hin verschoben wird. Die dickeren Abdeckmembranen wirken sich auf die Resonanzmechanismen des Membran-Absorbers näherungsweise nur als weitere zusätzliche Masse aus und verschieben dadurch das Dämpfungsmaximum zu tieferen Frequenzen. Bei einer Dicke der Abdeckmembran von 0,2 mm liegt das Dämpfungsmaximum bei 200/250 Hz, bei einer Dicke von 0,5 mm bei 160 Hz und bei einer Dicke von 0,8 mm bei 125 Hz.

Die Variation der Abdeckmembran ergibt somit, daß eine breitbandige Einfügungsdämpfung mit einem Umlenkschalldämpfer erreicht wird, dessen Membran-Absorber mit einer 0,2 mm dicken Abdeckmembran ausgestattet ist. Dieser Umlenkschalldämpfer besitzt eine Einfügungsdämpfung von ca. 20 dB in einem Frequenzbereich von 200 Hz bis 10 kHz.

Ist dagegen bei einem Frequenzspektrum nur eine schmalbandige Dämpfung bei tiefen Frequenzen von 125 Hz bzw. 160 Hz erforderlich, so ist ein Membran-Absorber vorzuziehen, dessen Abdeckmembran etwa 0,5 mm dick ist.

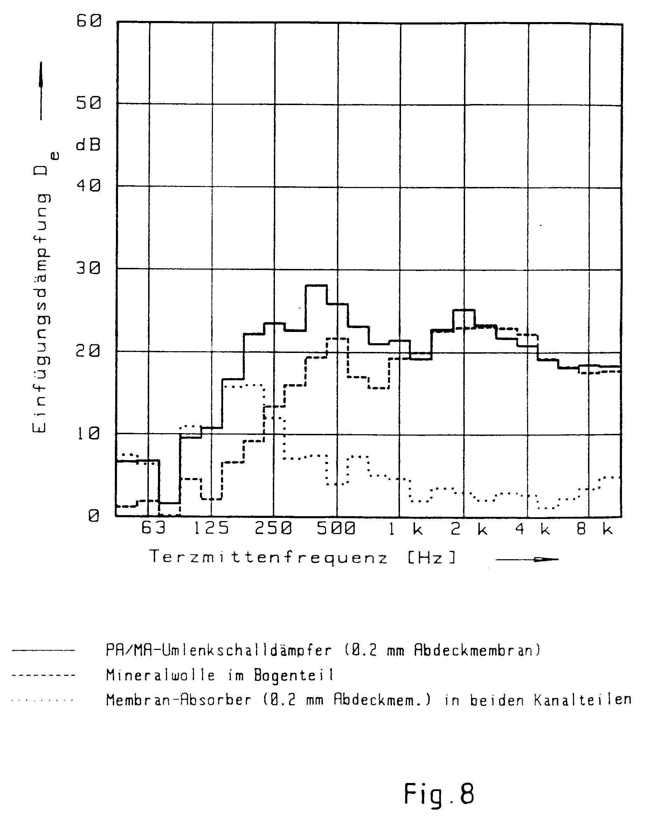

In Figur 8 werden die Einfügungsdämpfungen des breitbandig optimierten, aus porösem Absorber und Membranabsorber zusammengesetzten Umlenkschalldämpfers (0,2 mm Abdeckmembran) den Einfügungsdämpfungen der einzelnen Absorberkomponenten gegenübergestellt. Anhand dieser Gegenüberstellung werden die jeweiligen Anteile der einzelnen Absorbertypen an der gesamten Einfügungsdämpfung für den aus beiden Absorbertypen kombinierten Umlenkschalldämpfer aufgezeigt. Bei der Bestimmung der Einfügungsdämpfung der Membran-Absorber in beiden, geraden Kanalteilen wird die fest eingebaute Mineralwolle mit einem 1 mm dicken Aluminiumblech abgedeckt.

EP 0 555 814 A1

Die Einfügungsdämpfung des porösen Absorbers 8 im Bogenteil zeigt einen ansteigenden Kurvenverlauf bis zu einem ersten Dämpfungsmaximum bei 500 Hz. Der Einbruch in den Terzbändern 630 Hz bis 800 Hz ist auf eine Ausbildung von Quermoden in den schallharten, geraden Kanalteilen zurückzuführen, da diese dort durch die fehlende Ausgleichung nicht absorbiert werden. Im Frequenzbereich von 1600 Hz bis 4 kHz bildet sich ein zweites, relativ breites und konstantes Dämpfungsmaximum von ca. 23 dB infolge der Winkeldämpfung aus.

Bei den Membran-Absorbern sind im Frequenzbereich von 100 Hz und 200 Hz ansteigende Einfügungsdämpfungen mit einem Dämpfungsmaximum bei 160 Hz bis 200 Hz festzustellen. Nach dem Dämpfungsmaximum zeigt sich ein langsam abschwächender Kurvenverlauf.

Die durchgezogene Linie in Figur 8 zeigt jedoch, daß eine Kombination aus porösen Absorbern und Membran-Absorbern für den 90°-Umlenkschalldämpfer eine breitbandige Einfügungsdämpfung von ca. 20 dB im Frequenzbereich von 200 Hz bis 10 kHz aufweist. Durch die zusätzliche Auskleidung der Kanalabschnitte 1 und 3 mit Membran-Absorbern werden gegenüber der reinen Bogenauskleidungen bei tiefen und mittleren Frequenzen zwischen 125 Hz und 1250 Hz die Einfügungsdämpfung wesentlich erhöht.

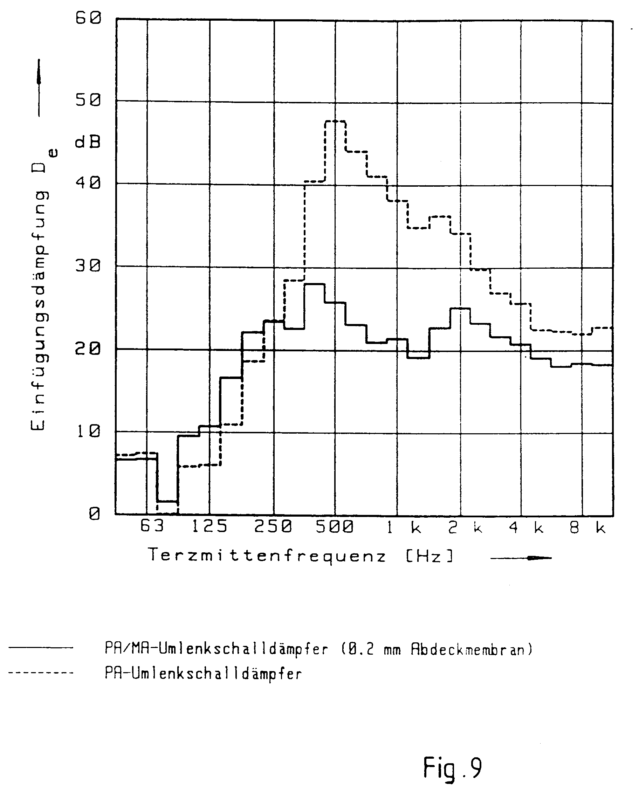

In Figur 9 ist eine Gegenüberstellung von Einfügungsdämpfung eines mit porösen Absorbern belegten Umlenkschalldämpfers und eines kombiniert mit porösem Absorbern und Membran-Absorbern belegten Umlenkschalldämpfers dargestellt. Der Vergleich zeigt, daß der kombinierte Umlenkschalldämpfer bei tiefen Frequenzen von 100 Hz bis 200 Hz ca. 5 dB höhere Dämpfungen aufweist. Ab 250 Hz weist dagegen der mit porösen Absorbern belegte Umlenkschalldämpfer generell höhere Einfügungsdämpfungen auf, wobei er sein Hoch im Bereich zwischen 400 Hz und 1 kHz besitzt. Gerade dieser Bereich kann jedoch in der Praxis meistens nicht ausgenutzt werden, da durch die geringe Schalldämmung der Kanalwände die hohen Einfügungsdämpfungen der schallabsorbierenden Einbauten drastisch reduziert werden. In Fällen, in denen es auf die Dämpfung von tiefen Frequenzen ankommt, ist es dagegen von besonderer Bedeutung einen kombinierten Umlenkschalldämpfer einzusetzen.

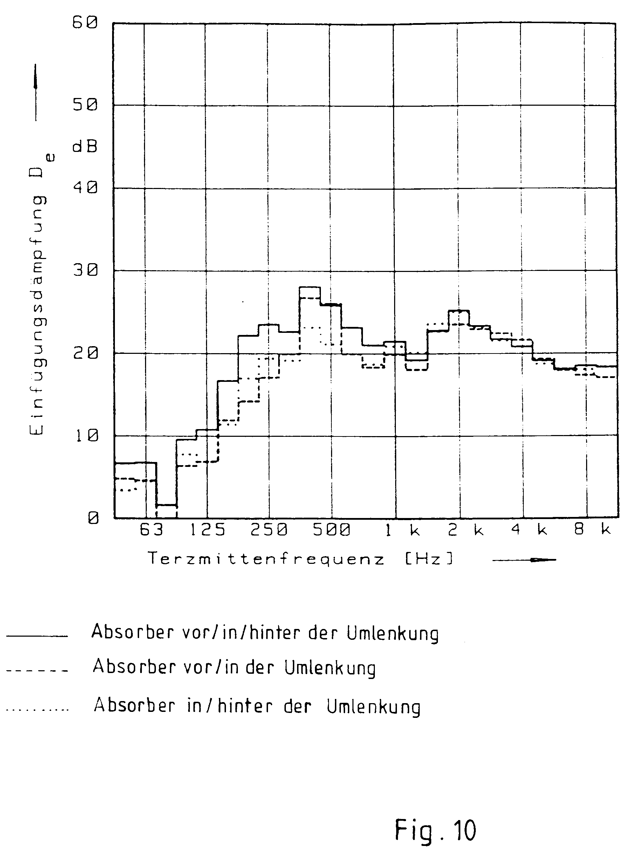

In Figur 10 sind die Auswirkungen unterschiedlicher Absorberanordnungen erkennbar. Diese Absorberanordnungen entsprechen der Darstellung in den Figuren 3 bis 5, wobei im Bogenteil 2 immer ein poröser Absorber vorgesehen ist. Durch die Zunahme der Absorberfläche läßt sich die Einfügungsdämpfung im Frequenzbereich von 125 Hz bis 315 Hz um ca. 4 dB erhöhen. Bei Frequenzen über 1 kHz sind dagegen die Einfügungsdämpfungen von der Absorberfläche relativ unabhängig, da die Einfügungsdämpfung dieser Frequenzen durch die Mineralwolle-Auskleidung im Bogenteil bestimmt wird.

Der Vergleich der Absorberanordnung vor/in und in/hinter dem Bogenteil 2 zeigt, daß im Wirkungsbereich des Membran-Absorbers bei 200 Hz und 250 Hz die Anordnung des Membran-Absorbers hinter dem Bogenteil höhere Einfügungsdämpfungen verursacht. Im Gegensatz dazu werden bei den Frequenzen 400 Hz und 500 Hz durch die Absorberanordnung vor/in dem Bogenteil höhere Einfügungsdämpfungen verursacht.

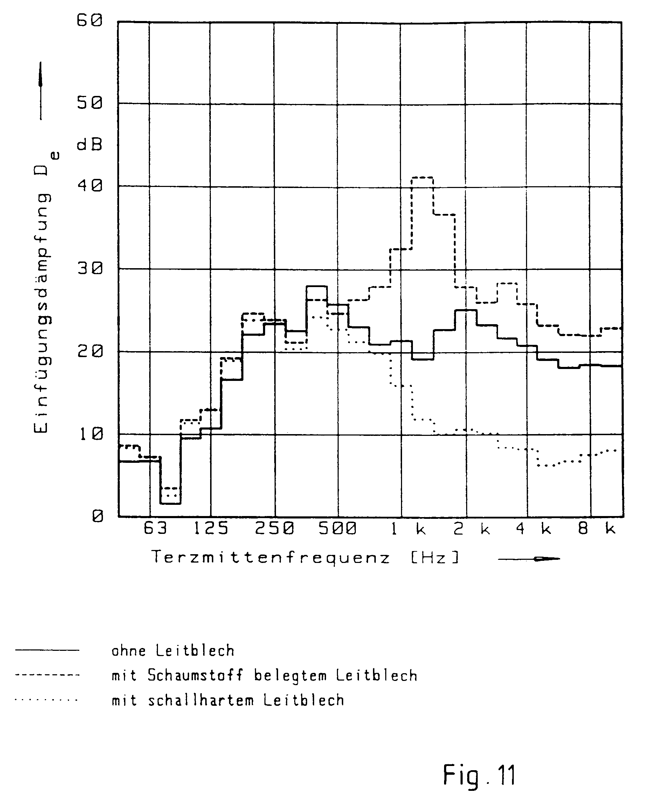

Der Einfluß eines Leitbleches 10 auf die Einfügungsdämpfung in einem über die gesamte Länge mit porösen Absorbern und Membran-Absorbern belegten Umlenkschalldämpfers ist in Figur 11 dargestellt. Hierbei ist erkennbar, daß der Einbau eines Leitbleches und zwar sowohl eines schallharten wie auch eines mit Schaumstoff belegten Leitbleches bei tiefen Frequenzen etwa unterhalb 250 Hz eine ca. 3 dB höhere Einfügungsdämpfung hervorruft. Bei tiefen Frequenzen breiten sich hauptsächlich ebene Wellen in dem Bogenteil aus. Durch das Leitblech 10 wird offensichtlich die Ausbreitung der ebenen Wellen gestört und dadurch eine Änderung der Einfallsrichtung bewirkt, die gegenüber dem streifenden Schalleinfall der ebenen Wellen eine höhere Dämpfung zur Folge hat.

Ferner wird auch die Einfügungsdämpfung durch ein mit Schaumstoff belegtes Leitblech im Bereich von über 500 Hz wesentlich erhöht. Die Ausprägung dieser höheren Einfügungsdämpfung wird durch die Absorbtionsgrade des Schaumstoffes bedingt. Diese Gegenüberstellung läßt zum einen erkennen, daß grundsätzlich Leitbleche die Wirkung eines Umlenkschalldämpfers bei tiefen Frequenzen verbessern und daß belegte Leitbleche die Einfügungsdämpfungen bei hohen Frequenzen sogar drastisch erhöhen.

5

Aktenzeichen: 1959.0          Datum: 16.01.1992

| P O S I T I O N S Z A H L E N L I S T E | | | | | |
|---|---|---|---|---|---|
| 1 | Kanalabschnitt | 34 | | | |
| 2 | Bogenteil | 35 | | | |
| 3 | Kanalabschnitt | 36 | | | |
| 4 | Flansch | 37 | | | |
| 5 | " | 38 | | | |
| 6 | äußere Wand | 39 | | | |
| 7 | innere Wand | 40 | | | |
| 8 | Absorber | 41 | | | |
| 9 | " | 42 | | | |
| 10 | Leitblech | 43 | | | |
| 11 | | 44 | | | |
| 12 | | 45 | | | |
| 13 | | 46 | | | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

**Patentansprüche**

1. Umlenkschalldämpfer zum Einsetzen in ein Luftführungssystem bestehend aus zumindest einem geraden Kanalabschnitt und einem Bogenteil,

dadurch gekennzeichnet,
daß der Kanalabschnitt (1, 3) und/oder der Bogenteil (2) mit einem Absorber (8, 9) zumindest teilweise ausgekleidet ist/sind.

2. Umlenkschalldämpfer nach Anspruch 1, dadurch gekennzeichnet, daß der Absorber (8, 9) zweidimensional auf einer äußeren Wand (6) und einer inneren Wand (7) im Inneren des Kanalabschnittes (1, 3) und/oder des Bogenteils (2) angeordnet ist.

3. Umlenkschalldämpfer nach Anspruch 1 oder 2, dadurch gekennzeichnet, daß der Bogenteil (2) um einen Radius von etwa 90° verläuft.

4. Umlenkschalldämpfer nach einem der Ansprüche 1 bis 3, dadurch gekennzeichnet, daß beidseits an den Bogenteil (2) Kanalabschnitte (1 und 3) anschließen.

5. Umlenkschalldämpfer nach wenigstens einem der Ansprüche 1 bis 4, dadurch gekennzeichnet, daß der Bogenteil (2) und Kanalabschnitt (1, 3) mit Absorbern (8, 9) gleicher Art ausgekleidet sind.

6. Umlenkschalldämpfer nach wenigstens einem der Ansprüche 1 bis 4, dadurch gekennzeichnet, daß der Bogenteil (2) und Kanalabschnitt (1, 3) mit Absorbern (8, 8a, 8b; 9, 9a, 9b) unterschiedlicher Art ausgekleidet sind.

7. Umlenkschalldämpfer nach wenigstens einem der Ansprüche 1 bis 6, dadurch gekennzeichnet, daß der Bogenteil (2) mit einem porösen Absorber ausgekleidet ist.

8. Umlenkschalldämpfer nach Anspruch 7, dadurch gekennzeichnet, daß der poröse Absorber aus Mineralwolle besteht, welche von Aluminiumblech abgedeckt ist.

9. Umlenkschalldämpfer nach wenigstens einem der Ansprüche 1 bis 8, dadurch gekennzeichnet, daß der Kanalabschnitt (1, 3) von einem Membran-Absorber ausgekleidet ist.

10. Umlenkschalldämpfer nach Anspruch 9, dadurch gekennzeichnet, daß der Membran-Absorber eine 0,2 mm dicke Aluminium-Abdeckmembran aufweist.

11. Umlenkschalldämpfer nach wenigstens einem der Ansprüche 1 bis 10, dadurch gekennzeichnet, daß im Bogenteil (2) ein Leitblech (10) angeordnet ist.

12. Umlenkschalldämpfer nach Anspruch 11, dadurch gekennzeichnet, daß das Leitblech (10) mit einem Absorber, vorzugsweise mit Schaumstoff belegt ist.

Fig.1

Fig. 2

Fig. 3

Fig. 4

Fig. 5

Fig. 6

- - - - - - - -   Einfügungsdämpfung (unkorrigiert)
· · · · · · · · ·   Einfügungsdämpfung (korrigiert)

Fig.7

---------- PA/MA-Umlenkschalldämpfer (0.2 mm Abdeckmembran)

--------- Mineralwolle im Bogenteil

· · · · · · · · · · Membran-Absorber (0.2 mm Abdeckmem.) in beiden Kanalteilen

Fig.8

Fig.9

Fig. 10

Fig. 11

| EINSCHLÄGIGE DOKUMENTE | | | EP 93102000.2 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) | |
| X | DE - B - 1 095 504 (NORDWESTDEUTSCHER RUNDFUNK) * Fig. 1; Spalte 1, Zeilen 15-26 * | 1,5,7, 8,9 | F 24 F 13/24 | |
| Y | * Fig. 1; Spalte 1 - Zeilen 15-26 * -- | 3,4, 11,12 | | |
| Y | DE - A - 1 809 426 (WOODS OF COLCHESTER) * Fig. 1; Anspruch 1 * -- | 3,4,11 | | |
| Y | US - A - 3 494 379 (HINDEN) * Fig. 1; Anspruch 1 * -- | 11,12 | | |
| A | DE - A - 3 339 701 (RISCHE) * Fig. 3,4; Zusammen- fassung * ---- | 10 | | |
| | | | **RECHERCHIERTE SACHGEBIETE (Int. Cl.⁵)** F 24 F E 04 B | |
| Der vorliegende Recherchenbericht wurde für alle Patentansprüche erstellt. | | | | |

| Recherchenort WIEN | Abschlußdatum der Recherche 27-04-1993 | Prüfer MEISTERLE |
|---|---|---|